# EUROPEAN PATENT SPECIFICATION

(11) **EP 1 436 688 B1**
(45) Date of publication and mention of the grant of the patent: **01.07.2015**
(21) Application number: 01953728.1
(22) Date of filing: 25.07.2001
(51) Int. Cl.: G06F 17/30

(54) **PORTABLE HIGH SPEED INTERNET DEVICE COMPRISING INTERNAL MEMORY FOR ACCESSING PREVIOUSLY SEEN IMAGES AND USER-CAPABILITIES FOR MODIFYING A SEQUENCE OF DOWNLOADING**
TRAGBARE SCHNELLE INTERNET-EINRICHTUNG MIT INTERNEM SPEICHER ZUM ZUGREIFEN AUF ZUVOR GESEHENE BILDER UND BENUTZERFÄHIGKEITEN ZUR MODIFIZIERUNG EINER DOWNLOAD-SEQUENZ
DISPOSITIF INTERNET PORTATIF A GRANDE VITESSE COMPRENANT UNE MEMOIRE INTERNE PERMETTANT D'ACCEDER A DES IMAGES VUES AU PREALABLE ET POTENTIELS D'UTILISATEUR PERMETTANT DE MODIFIER UNE SEQUENCE DE TELECHARGEMENT

(30) Priority: 25.07.2000 US 625272
(43) Date of publication of application: 14.07.2004
(73) Proprietor: DataWind Net Access Corporation, Mississauga, ON L5S 1V9 (CA)
(72) Inventor: Tuli, Raja, Montreal, Québec H3B 3T6 (CA)
(74) Representative: Walker, Ross Thomson
(86) International application number: PCT/CA2001/001057
(87) International publication number: WO 2002/008878

(56) References cited:
- EP-A- 0 833 260
- EP-A- 0 889 402
- US-A- 5 758 110
- BARTLETT J F: "EXPERIENCE WITH A WIRELESS WORLD WIDE WEB CLIENT" DIGEST OF PAPERS OF THE COMPUTER SOCIETY COMPUTER CONFERENCE (SPRING) COMPCON. TECHNOLOGIES FOR THE INFORMATION SUPERHIGHWAY. SAN FRANCISCO, MAR. 5 - 9, 1995, LOS ALAMITOS, IEEE COMP. SOC. PRESS, US, vol. CONF. 40, 5 March 1995 (1995-03-05), pages 154-157, XP000545425 ISBN: 0-7803-2657-1

## Description

### Prior Art

The background of the present invention includes US Patent # 5925103, Internet Access Device, which describes an improved Internet access system, vastly different from embodiments of the present invention. Other prior art would include palm top computers, hand-held computers and cellular telephones that have limited processing power due to design restrictions. Thus, these computers are much slower for accessing the Internet and World Wide Web.

Methods and devices to enable web browsing on a portable device are discussed in BARTLETT J F: "EXPERIENCE WITH A WIRELESS WORLD WIDE WEB CLIENT", DIGEST OF PAPERS OF THE COMPUTER SOCIETY COMPUTER CONFERENCE (SPRING) COMPCON. TECHNOLOGIES FOR THE INFORMATION SUPERHIGHWAY, SAN FRANSISCO, MAR. 5-9, 1995, LOS ALAMITOS, IEEE COMP, SOC. PRESS, US. vol. CONF. 40, 5 March 1995 (1995-03-05), pages 154-157, XP000545425, ISBN: 0-7803-2657-1.

### Summary

Embodiments of the present invention seek to enhance a server's processing speed, data transfer and retrieval to and from portable devices, with the aid of specialised embedded software in the server. The result is a cost effective Internet access solution.

According to one aspect of the present invention, there is provided a method implemented on a portable device as defined in claim 1 hereinafter.

According to another aspect of the present invention, there is a provided a computer readable storage medium as defined in claim 6 hereinafter.

According to a further aspect of the present invention, there is provided a method implemented on a server system as defined in claim 9 hereinafter.

Embodiments of the present invention comprise a portable device, similar to a combination of a cellular telephone and palm top computer that can access the Internet and World Wide Web.

Embodiments of the present invention comprise a portable device that comprises a modem that connects to a cellular telephone. Thus, the device has a wireless connection to the Internet. A host computer, which may also be a Web server connects directly to the Internet. The host computer comprises multiple software programs, for example a Browser Translator, which translates HTML images into black and white bit map or raster images. The compressed bit map or raster images are sent to the portable device, and the device decompresses the images. Thus, the user views a bit map image of a Web page.

The portable device comprises methods for pointing and clicking on text and images representing links to other Web pages. Clicking events are sent to the host computer that performs the commands via a virtual browser. The host computer then sends the required information to the portable device as a compressed image. The portable device decompresses the image and the user views a new page.

Further embodiments of the present invention comprise a method of the user modifying the sequence of downloading images to the device. A user familiar with the layout of a Web page can scroll a specific area, before the information is downloaded, to initiate downloading in that area prior to other areas of the Web page being downloaded. The user can also click on an area of the displayable area of the device to initiate downloading in that area, prior to other areas being downloaded.

Still further embodiments of the present invention comprise an internal memory in the device whereby downloaded Web pages or images are stored, and the user is able to access these pages by clicking on a "back" or "forward" button.

Other embodiments of the present invention comprise a method of data transfer from the host computer to the device, whereby data is sent in multiple procedures.

Thus, the user is able to view a partial image of a Web page sooner, and is able to realize the contents of the page and click on links sooner.

### DETAILED DESCRIPTION OF THE DRAWINGS

The invention is described in more detail below with respect to an illustrative embodiment shown in the accompanying drawings in which:
**FIGURE 1** illustrates a block diagram of the host computer, the portable device with wireless connection and the user.
**FIGURE 2** illustrates portions of the image with respect to the displayable area.
**FIGURE 3** illustrates sub-divisions of the image to be displayed.

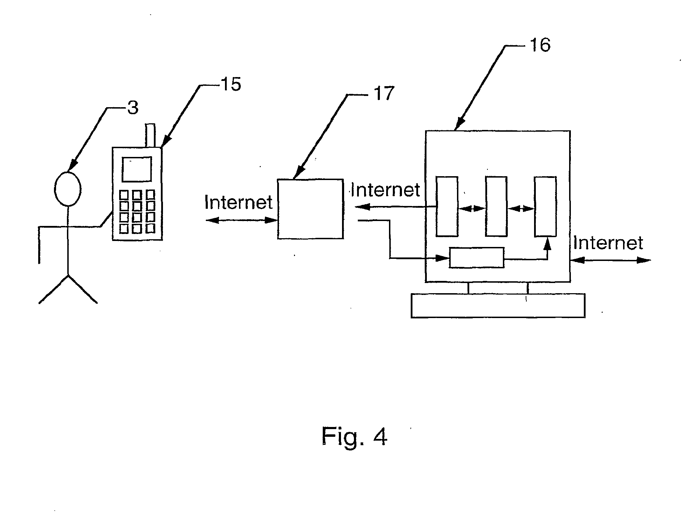

**FIGURE 4** illustrates the portable device, the direct server and the host server.
**FIGURE 5** illustrates an enlarged view of the device and the image
**FIGURE 6** illustrates an enlarged view of the device and the image and scroll bars
**FIGURE 7** illustrates an enlarged view of the device and the image with an area to be clicked
**FIGURE 8** shows the normal sequence of downloading
**FIGURE 9** shows the altered sequence of downloading
**FIGURE 10** displays the "back" and "forward" buttons
**FIGURE 11** illustrates a sequence of downloading an image line by line

### DETAILED DESCRIPTION OF EMBODIMENTS OF THE PRESENT INVENTION

The principal embodiment of the present invention aims to provide a device that allows a user to access the Internet or the World Wide Web (WWW), which device is similar to a palm top computer. It is a further aim of the present invention, to reduce the cost of the device. It is a further aim of the present invention, is to increase the speed of refreshing the screen when the user clicks on a link and commands another page to be displayed.

Currently, existing palm top devices such as the Palm Pilot VII and Windows CE type devices contain an operating system, and within the operating system a minibrowser to interpret information received from the WWW or Internet and then display this information on the screen. This requires a powerful microprocessor.

With reference to applications 09/496,172, 09/501,585, 09/504,809, 09/504,808 and 09/504,807, embodiments of the present invention seek to provide a method and system of storing previously viewed pages on the device. Thus, a user is able to utilize a pointer to select and press a "back" button or a "forward" button to view previously accessed pages, and which pages are stored directly in the device. Embodiments of the invention further seek to provide a method of enabling the user to scroll to a specific area thereby initiating downloading in that area, or the user clicking on a specific area to initiate the downloading.

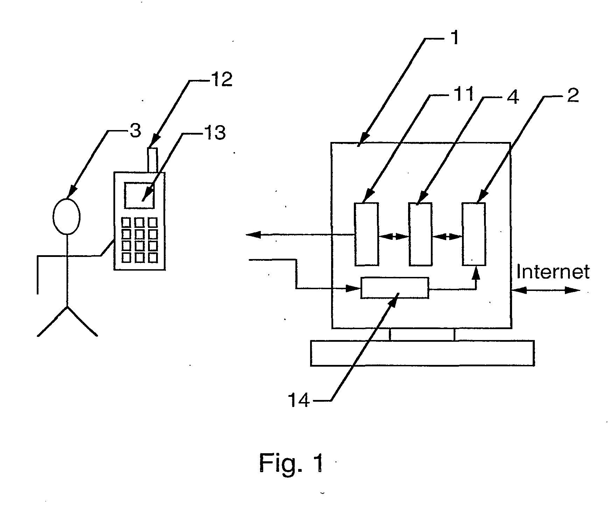

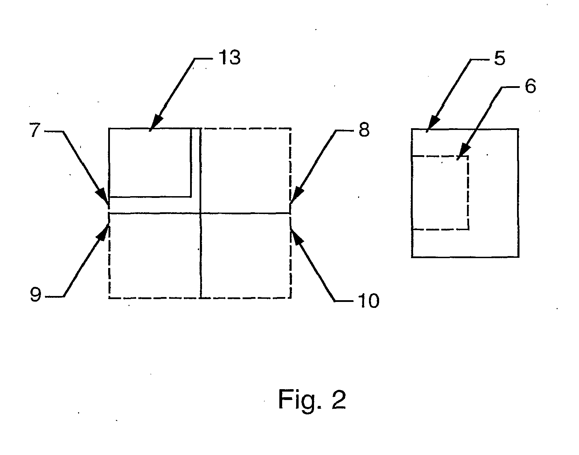

The principal embodiment of the present invention is disclosed in Figure 1. A host computer 1 is depicted that is connected to the Internet and may also be a Web server. Running in the host computer, is a Web server program 2. When a remote user 3 requests to view a Web page (or electronic message etc.) the Web server software receives HTML, JAVA, etc. information from the World Wide Web and transmits this information to another software, the Browser Translator 4. This software translates the information, (i. e. the entire image comprising graphics and text) received in the form of HTML, Java, etc. (information may be gathered from different sources) and translates it to a black and white bit map or raster image. In another embodiment, the software translates the information into a raster color

image. The image **5,** as shown in **Figure 2****,** contains the information that would normally be displayed on a single Web page. The translation program therefore, also acts as a virtual browser **6.** As can be seen in **Figure 2****,** the image **5** to be displayed in a browser window **6** is usually larger than the displayable area of the browser window **6.**

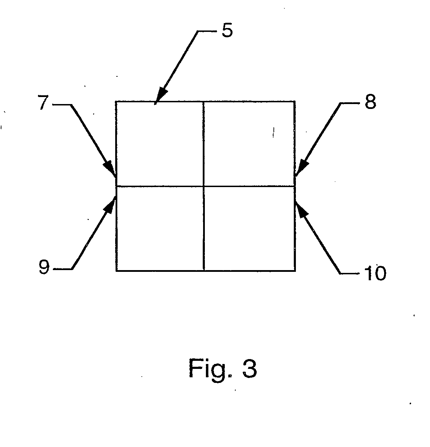

The image 5 is further divided into sections **7, 8, 9,** and **10,** as shown in **Figure 3****.** The image is divided after the bitmap or raster is created. The reason for the division (as will be explained later) is for the purpose of display priority on the user's display. The image **5** is then sent to another program **11** running on the host computer **1 (****Fig. 1****),** which compresses the image using a loss-less compression method. The compression method may be group 3 or group 4, or another method.

The programs **4** and **11** can have multiple instances running simultaneously on the host server for the purpose of connecting to multiple users. The compressed image, after being processed by program **11,** is sent to the user, using a protocol in which information may be broken down into packets.

The information is received by a palm top device **12** that has the ability to display a monochrome image, in its display window **13.** The information is decompressed and displayed in the order of priority such that part of image **7,** which substantially or completely covers the displayable area **13 (****Fig. 2****),** of the palm device is decompressed and displayed first and then sequentially the portions **8, 9, 10** of the image are decompressed and stored in an internal memory of the palm top device to be displayed later when the user scrolls up, down, or sideways to these parts of the image.

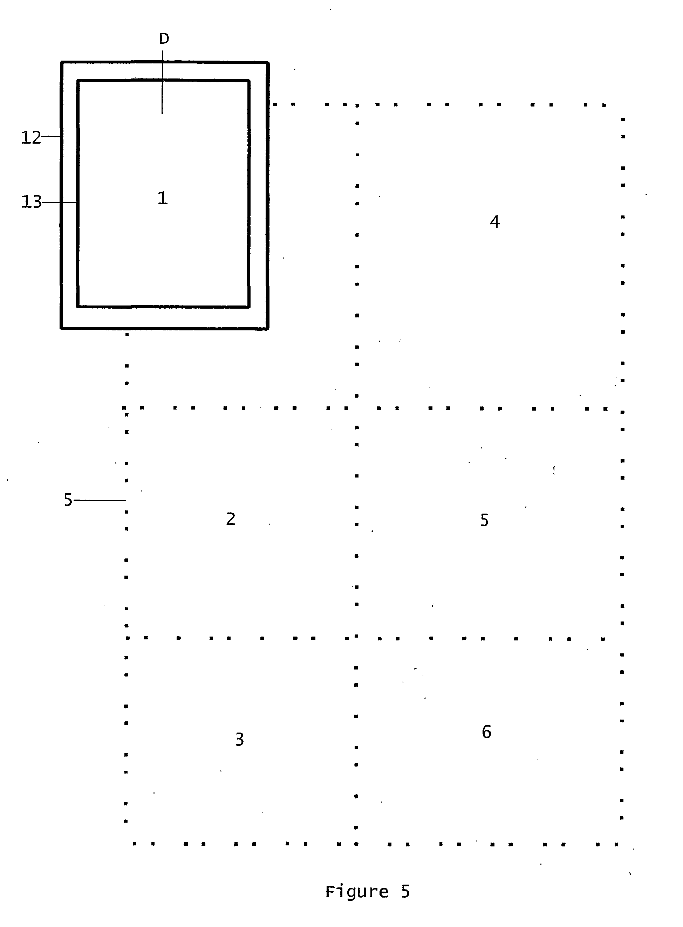

**Figure 5** is an enlarged view of the displayable area **13** of the device **12** and the image **5.** The host computer transmits the compressed image to the device via the user's cellular telephone. The information is received by the device, which has the ability to display a monochrome image, in its display window. In this embodiment, the virtual browser window is of equal size to the displayable area of the device. The information received by the device is decompressed and displayed in the order of priority, as shown numerically in **Figure 5****.** The image is displayed such that part **D** of image, which is decompressed and displayed first completely covers the displayable area **13,** of the device and then sequentially the other portions of the image are decompressed and stored in an internal memory of the device to be displayed later when the user scrolls up, down, or sideways to these parts of the image.

The principle embodiment of the present invention discloses a method for the user to alter the predetermined sequence of downloading of a requested Web page or image. The user can scroll to an area on the display of the device, thereby altering the sequence of downloading such that the scrolled-to area will be downloaded first, followed by the surrounding area, until the entire image has been transmitted to the device.

After having viewed a Web page multiple times, the user will be familiar with the layout of the Web page. Therefore, the user knows an approximate location on the displayable area of the device of essential information or links with which the user is most concerned,

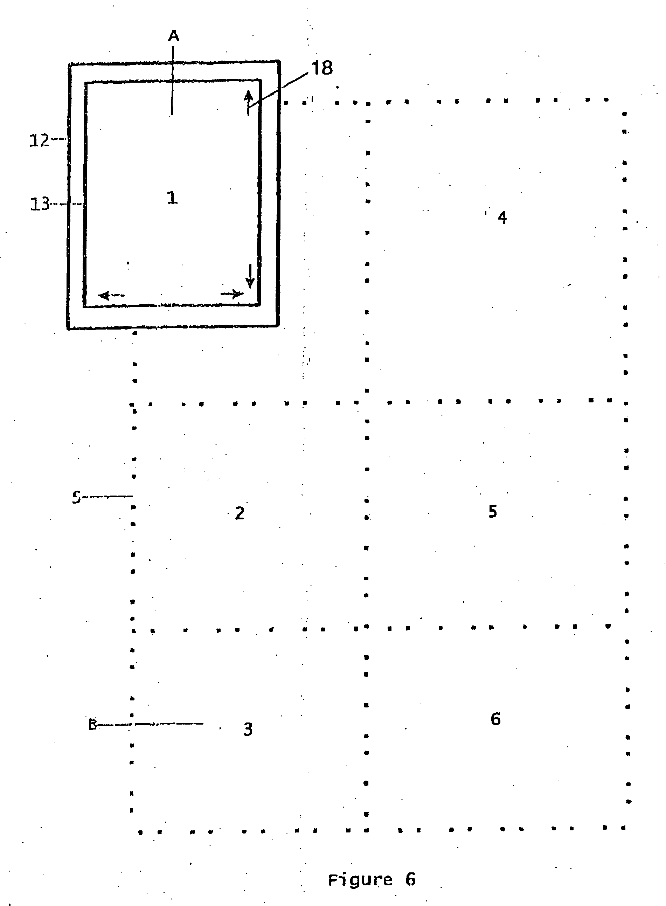

For example, **Figure 6** illustrates numerically the predetermined sequence of downloading for a specific Web page. The device **12** and displayable area **13** are shown. Thus, area **A** is the first portion of the web page **5** to be transmitted to the device. However, the user is ultimately interested with information located at area **B** and accordingly knows that this information is accessible by clicking twice, with the pointer, on conventional scroll bars **18** bordering the display, Thus, to obtain this information first, the user can scroll until the appropriate area **B** has been advanced. Thus, the sequence of downloading and to initiate downloading in the scrolled-to area. The scroll bars enable the user to scroll faster than the downloading process.

The device sends a message to the host computer conveying the location of the scrolled-to area on the device. A program interprets the received message and provides a virtual scrolling procedure to the same location in the virtual browser. The translator program, in the virtual browser, subsequently begins translating the information in the scrolled-to area into a bit map or raster image, which image is consequently compressed by the compression program and then dispatched to the device where the required information is displayed first.

Thus, the sequence of downloading is modified according to the needs or preferences of the user. The user can scroll, horizontally or vertically, to any area of the image to activate downloading in that area first. Furthermore, the surrounding areas of the scrolled-to area will be subsequently downloaded because of the likelihood of the user requiring this data sooner than information located on other areas of the page. The entire page will be eventually downloaded, however the order of downloading is modified.

In another embodiment of the present invention, while information is being downloaded into the device, the user can click in a specific area on the displayable area of the device, to modify the order of downloading such that the information located at the clicked-on area will be downloaded first.

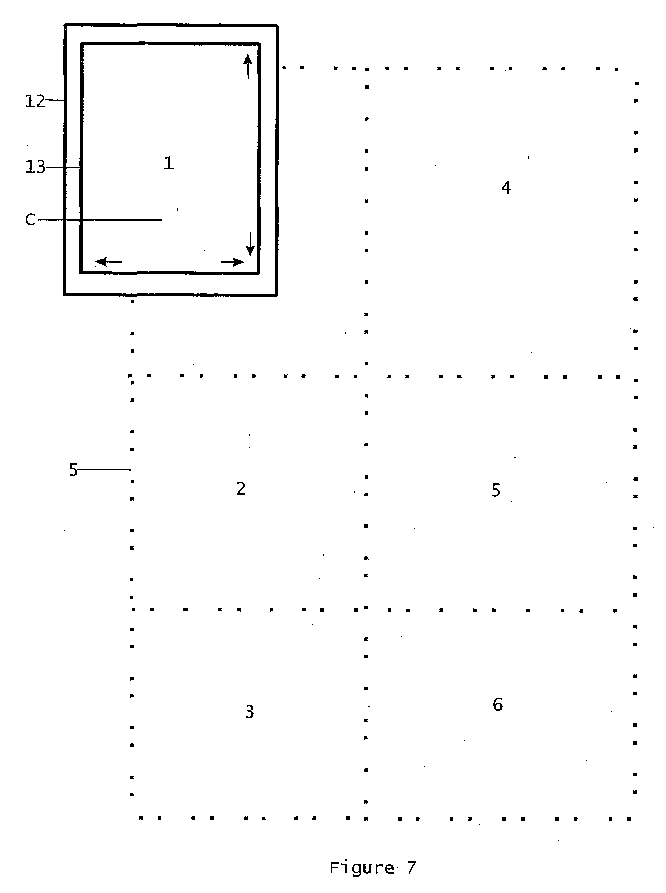

As explained in the previous embodiment, the user can scroll to a preferred area to begin downloading that area first. However, with reference to Figure 7, the user can use the pointer to click on a specific area of the displayable area 13 of the device 12 to specify that this portion of the image is to be downloaded first.

For example, the user knows that essential links are located in area C of the displayable area of the device 12. Thus, the user can use the pointer to click upon the appropriate location **C** in the displayable area **13.** The device sends a message to the host computer conveying the location of the click down event on the image of the device. A program interprets the message and provides and the translator program subsequently begins translating the information from the new location, into a bit map or raster image. The image is compressed by the compression program and subsequently dispatched to the device where the required information is displayed first.

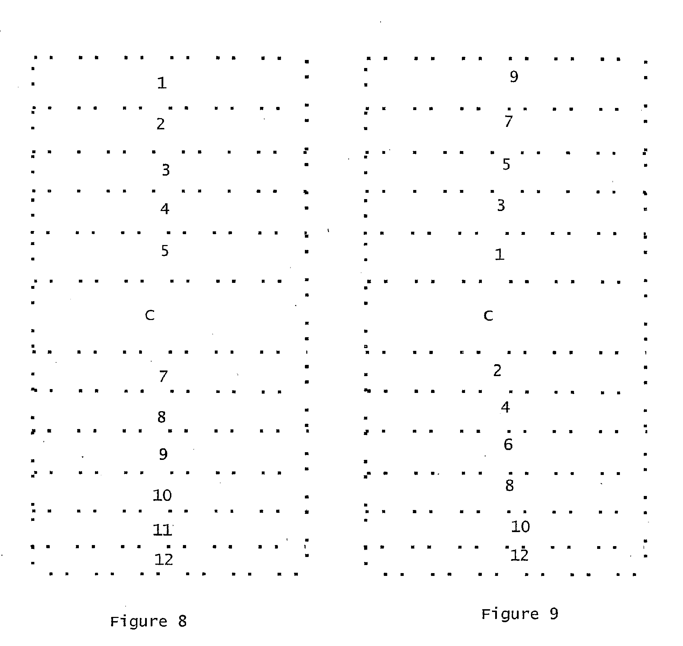

Thus, the predetermined sequence of downloading is modified, according to the needs or preferences of the user. **Figure 8** is an enlarged view and illustrates numerically a usual sequence of downloading leading to the area **C.** **Figure 9** is an enlarged view of the clicked-on area **C** of **Figure 7****.** **Figure 9** further shows a potential sequence of downloading subsequent to the user clicking on the specific area. The immediate surrounding areas of the clicked-on area will be downloaded accordingly. The remaining parts of the page are transmitted, until the entire page has been sent from the host server.

Thus, the user is able to establish a precise location where downloading is to be activated first, according to the user's preferences.

A CPU resident in the palm top device therefore has the ability to decompress a bit map or raster image that may be larger than the size of the display and allow the user to traverse this bit map or raster image. The primary method of traversing the image is through conventional scroll bars positioned at the-sides of the image.

The resident CPU on the palm top device has no ability to determine which parts part or parts of the image, that is being displayed, represent links to other Web pages etc. Thus, the translator program **4 (****Fig. 1****)** translates the image in the virtual browser **6** such that the words that represent links on the page **5 (****Fig. 2****)** are translated to be slightly bolder. The user may therefore consider text that is bold to be links.

The palm top device provides the user with a pointing device. This pointing device may be a touch screen or tracking ball, etc. The palm top device also allows the user to click on specified areas. As soon as the user clicks on part of an image, the shape of the pointer changes from an arrow to an hourglass. A message is sent to the host computer, transmitting the location of the clicked down event. A program **14** interprets the message and provides a virtual click down in the virtual browser created in the translator program **4.** If the user has pressed in an area of the image that does not represent a link or text box, a message is dispatched to the palm top device which immediately changes the hourglass shape of the pointer back to an arrow (in the case of a touch screen, from an hour glass to nothing). Further to this, if the user has clicked on a part of the image which represents a link, a new Web page is extracted from the Internet or WWW, translated by translator program **4 (****Fig 1****)** into a bit map or raster, and compressed by compression program **11** and dispatched to the palm top device where a new page is displayed. Furthermore, the image **5** is continuously being updated and translated and sent to the palm top device where it is continuously being refreshed. This occurs once every few seconds.

In another embodiment of the present invention, the user may save and store the rasterized Web pages in the memory of the device, and therefore be able to view offline the stored rasterized pages, at a later time. The advantage of this embodiment is that the user does not have to connect to the host server to view the saved Web pages.

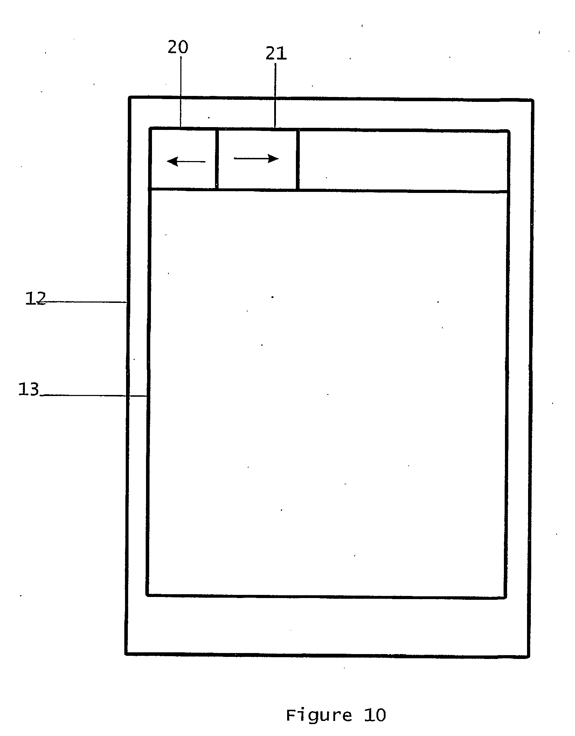

In another embodiment of the present invention, reference is made to **Figure 10** where displayable area **13** of the device **12** is illustrated. "Back" button **20** and "forward" button **21** provide the user the means of viewing previously accessed or seen pages, with respect to the user's currently displayed page. The user can utilize the pointing device, to select and click upon the "back" button and "forward" button to view the previously seen pages, which pages are stored in an internal memory in the device because the pages were previously downloaded. Thus, as soon as the user clicks on the "back" button the device displays the requested page immediately because the page is stored in the device. Thus, retrieving previously seen pages is faster and more efficient for the user.

The device also sends a message to the host computer that a click down event has occurred on the display of the device. A program interprets the received message and executes a virtual clicking or pressing of a "back" button in the virtual browser and the page in the virtual browser is changed. Thus, the image on the display of the device and the image of the virtual browser are logged onto identical pages. However, the host server does not transmit the page again because the host server detects that the page is currently displayed on the device. The device and the virtual browser must always be on the same page in order for any command executed by the user on the device, such as selecting a link, be executed properly in the virtual browser.

The same operation would occur if the user were to select and click upon the "forward" button.

In another embodiment of the present invention, the host server sends the compressed data to the device in a sequence of every second line of data, which sequence is repeated until all of the compressed data has been sent.

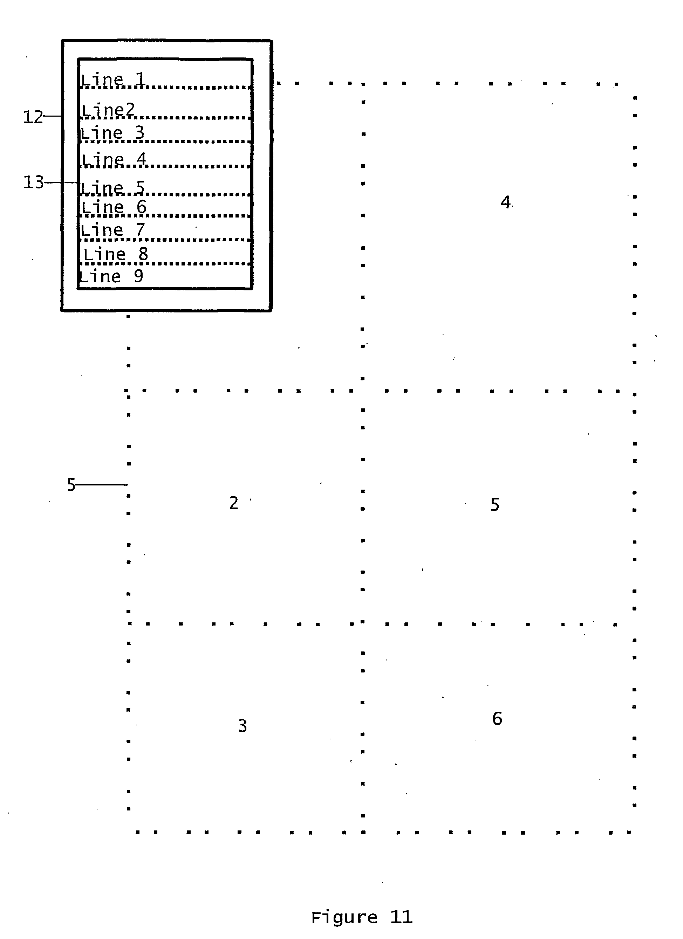

**Figure 11** illustrates numerically a conventional method of data transfer from the host computer to the device **12.** The compressed bit map or raster image is sent consecutively, line by line, until the entire image has been sent to the device. The displayable area of the device has a resolution of 320 x 240 pixels and the time to completely fill the displayable area of the device with a portion of the image is approximately six seconds.

In the present embodiment, the data transfer from the host computer to the device is such that the compressed data is sent by every second line for example, line 2, line 4, line 6 etc. The procedure is then repeated with line 1, line 3, line 5 etc. until the entire displayable area of the device is covered by a portion of the image. Thus, the transfer of data is divided into two procedures, with each procedure taking approximately three seconds. The total amount of time to fill the displayable area remains six seconds.

The transmission of the compressed data by such a method enables the user to view a partial image sooner, and which partial image may be enough information for the user to discern what that portion of the image represents. Thus, the user may be able to realize sooner the information that is represented or select and click a link, in that portion of the image.

When the user clicks in a text box or in a box in the display area into which letters or numbers must be input, the cursor first changes into an hourglass, and a message is sent to the host server. The host server recognizes that the click down event has occurred in the text box, and sends a message back to the palm top device to inform the palm top device to pop-up a keyboard on part of the screen. The user then types, using the pointer, the letters or words to be entered into the text box and presses "enter" or "go". The keyboard then disappears and the cursor changes back to an hourglass shape (in another embodiment, the keyboard could be replaced with a real keyboard or with an area that recognizes users' handwriting). The information typed into the text box is transmitted in a message to the host computer. The host computer enters the information into a text box in the virtual browser.

The user sees, after a short pause, as the image is refreshed on the palm top device, that the words, or letters or numbers have been entered into the text box. Further to this, the host computer may also break up the image such that the portion that has been changed, i.e. the text box area, is sent first.

In another embodiment of the present invention, images are only refreshed when as event occurs such as a mouse down event on a link or in a text box.

In a further embodiment only those portions of the image that changes may be transmitted from the host computer to the palm top device. Other images in the virtual browser that are continuously changing, such as banner advertisements, may be the only other images sent to the palm top computer as they change.

In the principal embodiment, the palm top device also contains a modem, which can be linked to the user's mobile telephone **15** and information that is communicated between the palm top device and the host computer is sent and received wirelessly through the mobile telephone.

Furthermore, the palm top device only contains enough memory to store the current displayable page. When the user presses a back or forward button, a message is sent to the host server, and the host server sends the reference page. The back and forward buttons etc. may be hard wired into the palm top device, or may be part of the display area.

Further to this, part of the image representing buttons (and other things) on the virtual browser may be sent as part of the compressed image and buttons such as forward and back may be treated the same way as links are handled as previously described.

In another embodiment, the palm top device comprises a modem that permits the device to connect to a cellular telephone 15 in digital format.

In another embodiment, the connection to the cellular telephone 15 is made through an analog modem connected to an ear jack of the cellular telephone.

In yet another embodiment of the present invention, the modem is replaced by an analog modem that has the capability to be connected to a landline providing a standard 56kbps-type connection.

Further embodiments may provide connections through ISDN, cable modems etc.

In a further embodiment, the palm top device may contain a large screen to be used in a fashion similar to a home Internet appliance.

In a further embodiment, the image transferred between the host computer and the remote device (previously the palm top device) may be a color image and the compression method used may be of a Jpeg or other compression methods used for color images. A gray scale image may also be used to reduce bandwidth or display costs.

In a further embodiment, the device includes no screen, but only outputs to be hooked to a television screen or external monitor for display.

The remote device in the principal embodiment only has the ability to decompress the image it receives; display the image it receives; allow the user to scroll through the image; provide the user with a pointing device to point and click on the image; send messages providing location of click down event; provide the user with a method to input letters and numbers; send a message containing these letters and numbers.

The principal embodiment contains no other structure or intelligent information about the image.

## Claims

1. A method implemented on a portable device (12) to access remote documents, the method comprising:
sending from the device (12) to a remote server (1) a request for a document, the document including graphics and text;
receiving at the device (12) from the remote server (1) a first portion (7) of an image (5) in a compressed format, the first portion (7) of the image (5) having been rendered at the remote server (1) from the document including the graphics and the text, the area of the image (5) larger than a displayable area (13) of the device (12);
displaying the first portion (7) of the image (5) on the device (12)
receiving input at the device (12) indicating a user (3) of the device (12) is scrolling the first portion (7) of the image (5);
sending a message to the remote server (1) indicating a scrolled to area of the image (5); and
receiving at the device (12) from the remote server (1) a second portion (8, 9, 10) of the image (5) in a compressed format, the second portion (8, 9, 10) of the image (5) having been rendered at the remote server (1) from the document including the graphics and the text; **characterised in that** the method further comprises:
subsequent to the receiving of the second portion (8, 9, 10) of the image (5) and in response to the sending of the message, receiving at the device (12) additional portions (8, 9, 10) of the image (5) that surround the second portion (8, 9, 10) of the image (5).

2. The method of claim 1 wherein the document is an HTML web page.

3. The method of claim 1 wherein the scrolling is horizontal.

4. The method of claim 1 wherein the scrolling is vertical.

5. The method of claim 1 further comprising responding to a user click within a displayable area (13) of the device (12) while the additional portions (8, 9, 10) are being received by the device (12).

6. A computer readable storage medium including program code that when processed by a processor of a portable device (12) causes a method to be performed by the portable device (12) to access a remote document, the method comprising:
sending from the device (12) to a remote server (1) a request for a document, the document including graphics and text;
receiving at the device (12) from the remote server (1) a first portion (7) of an image (5) of the document in a compressed format, the first portion (7) of the image (5) having been rendered at the remote server (1) from the document including the graphics and the text, the area of the image (5) being larger than a displayable area (13) of the device (12);
displaying the first portion (7) of the image (5) on the device (12);
receiving input at the device (12) indicating a user (3) of the device (12) is scrolling the first portion (7) of the image (5);
sending a message to the remote server (1) indicating a scrolled to area of the image (5);
receiving at the device (12) from the remote server (1) a second portion (8, 9, 10) of the image (5) in a compressed format, the second portion (8, 9, 10) of the image (5) having been rendered at the remote server (1) from the document including the graphics and the text; and
subsequent to the receiving of the second portion (8, 9, 10) of the image (5) and in response to the sending of the message, receiving at the device (12) additional portions (8, 9, 10) of the image (5) that surround the second portion (8, 9, 10) of the image (5).

7. The computer readable storage medium of claim 6 wherein the document is an HTML web page and the scrolling is horizontal or vertical.

8. The computer readable storage medium of claim 6 wherein the compuer readable storage medium includes further program code that when processed by the processor of the portable device causes the method to be performed by the portable device to access a remote document, the method further comprising responding to a user click within a displayable area (13) of the device (12) while the additional portions (8, 9, 10) are being received by the device (12).

9. A method implemented on a server system, comprising:
receiving from a remote portable device (12) a request for a document;
receiving the document, the document including graphics and text, rendering at least a first portion of the document to create an image of the first portion (7) of the document, compressing the image of the first portion (7) of the document and sending the compressed image of the first portion (7) of the document to the remote portable device (12);
receiving from the remote portable device (12) a message indicating a user (3) of the remote portable device (12) has scrolled the image of the first portion of the document and indicating a scrolled-to area of the document;
rendering at least a second portion of the document to create an image of the second portion (8, 9, 10) of the document, the second portion of the document including the scrolled-to area, compressing the image of the second portion (8, 9, 10) of the document and sending the compressed image of the second portion (8, 9, 10) of the document to the remote portable device (12); **characterised in that** the method further comprises:
subsequent to the sending of the second portion of the image (8, 9, 10) and in response to the sending of the message, automatically generating additional compressed portions of the image (8, 9, 10) that surround the second portion of the image (8, 9, 10) and sending the additional compressed portions of the image (8, 9, 10) to the user (3).

10. The method of claim 9 wherein the sending of the additional compressed portions of the image (8, 9, 10) corresponds to a change to a previously determined order of sending compressed portions of the image (8, 9, 10) to the remote device (12).

## Patentansprüche

1. Auf einer tragbaren Einrichtung (12) implementiertes Verfahren für den Zugriff auf Remote-Dokumente, wobei das Verfahren Folgendes umfasst:
Senden, von der Einrichtung (12) an einen Remote-Server (1), einer Anforderung eines Dokuments, wobei das Dokument Grafiken und Text enthält;
Empfangen an der Einrichtung (12), vom Remote-Server (1), eines ersten Teils (7) eines Bildes (5) in einem komprimierten Format, wobei der erste Teil (7) des Bildes (5) am Remote-Server (1) aus dem die Grafiken und den Text enthaltenden Dokument wiedergegeben wurde, wobei der Bereich des Bildes (5) größer als ein darstellbarer Bereich (13) der Einrichtung (12) ist;
Anzeigen des ersten Teils (7) des Bildes (5) auf der Einrichtung (12);
Empfangen von Input an der Einrichtung (12) und Anzeige dessen, dass ein Benutzer (3) der Einrichtung (12) den ersten Teil (7) des Bildes (5) scrollt;
Senden einer Meldung an den Remote-Server (1) unter Anzeige eines angescrollten Bereichs des Bildes (5); und
Empfangen an der Einrichtung (12), vom Remote-Server (1), eines zweiten Teils (8, 9, 10) des Bildes (5) in einem komprimierten Format, wobei der zweite Teil (8, 9, 10) des Bildes (5) am Remote-Server (1) aus dem die Grafiken und den Text beinhaltenden Dokument wiedergegeben wurde; **dadurch gekennzeichnet, dass** das Verfahren ferner Folgendes umfasst:
nach dem Empfangen des zweiten Teils (8, 9, 10) des Bildes (5), und als Reaktion auf das Senden der Meldung, Empfangen an der Einrichtung (12) von zusätzlichen Teilen (8, 9, 10) des Bildes (5), die den zweiten Teil (8, 9, 10) des Bildes (5) umgeben.

2. Verfahren nach Anspruch 1, worin das Dokument eine HTML-Webseite ist.

3. Verfahren nach Anspruch 1, worin das Scrollen horizontal erfolgt.

4. Verfahren nach Anspruch 1, worin das Scrollen vertikal erfolgt.

5. Verfahren nach Anspruch 1, ferner umfassend das Reagieren auf einen Benutzerklick innerhalb eines darstellbaren Bereichs (13) der Einrichtung (12), während die zusätzlichen Teile (8, 9, 10) von der Einrichtung (12) empfangen werden.

6. Computerlesbares Speichermedium einschließlich Programmcode, der beim Verarbeiten durch einen Prozessor einer tragbaren Einrichtung (12) bewirkt, dass von der tragbaren Einrichtung (12) ein Verfahren für den Zugriff auf ein Remote-Dokument durchgeführt wird, wobei das Verfahren Folgendes umfasst:
Senden, von der Einrichtung (12) an einen Remote-Server (1), einer Anforderung eines Dokuments, wobei das Dokument Grafiken und Text enthält;
Empfangen an der Einrichtung (12), vom Remote-Server (1), eines ersten Teils (7) eines Bildes (5) des Dokuments in einem komprimierten Format, wobei der erste Teil (7) des Bildes (5) am Remote-Server (1) aus dem die Grafiken und den Text enthaltenden Dokument wiedergegeben wurde, wobei der Bereich des Bildes (5) größer als ein darstellbarer Bereich (13) der Einrichtung (12) ist;
Anzeigen des ersten Teils (7) des Bildes (5) auf der Einrichtung (12);
Empfangen von Input an der Einrichtung (12) und Anzeige dessen, dass ein Benutzer (3) der Einrichtung (12) den ersten Teil (7) des Bildes (5) scrollt;
Senden einer Meldung an den Remote-Server (1) unter Anzeige eines angescrollten Bereichs des Bildes (5);
Empfangen an der Einrichtung (12), vom Remote-Server (1), eines zweiten Teils (8, 9, 10) des Bildes (5) in einem komprimierten Format, wobei der zweite Teil (8, 9, 10) des Bildes (5) am Remote-Server (1) aus dem die Grafiken und den Text enthaltenden Dokument wiedergegeben wurde; und
nach dem Empfangen des zweiten Teils (8, 9, 10) des Bildes (5), und als Reaktion auf das Senden der Meldung, Empfangen an der Einrichtung (12) von zusätzlichen Teilen (8, 9, 10) des Bildes (5), die den zweiten Teil (8, 9, 10) des Bildes (5) umgeben.

7. Computerlesbares Speichermedium nach Anspruch 6, worin das Dokument eine HTML-Webseite ist und das Scrollen horizontal oder vertikal erfolgt.

8. Computerlesbares Speichermedium nach Anspruch 6, worin das computerlesbare Speichermedium ferner Programmcode beinhaltet, der beim Verarbeiten durch den Prozessor der tragbaren Einrichtung bewirkt, dass von der tragbaren Einrichtung das Verfahren für den Zugriff auf ein Remote-Dokument durchgeführt wird, wobei das Verfahren ferner das Reagieren auf einen Benutzerklick innerhalb eines darstellbaren Bereichs (13) der Einrichtung (12) umfasst, während die zusätzlichen Teile (8, 9, 10) von der Einrichtung (12) empfangen werden.

9. Auf einem Serversystem implementiertes Verfahren, umfassend:
Empfangen, von einer remoten tragbaren Einrichtung (12), einer Anforderung eines Dokuments;
Empfangen des Dokuments, wobei das Dokument Grafiken und Text enthält, unter Wiedergabe zumindest eines ersten Teils des Dokuments, um ein Bild des ersten Teils (7) des Dokuments zu erstellen, Komprimieren des Bildes des ersten Teils (7) des Dokuments und Senden des komprimierten Bildes des ersten Teils (7) des Dokuments an die remote tragbare Einrichtung (12);
Empfangen, von der remoten tragbaren Einrichtung (12), einer Meldung, die anzeigt, dass ein Benutzer (3) der remoten tragbaren Einrichtung (12) das Bild des ersten Teils des Dokuments gescrollt hat, und Anzeigen eines angescrollten Bereichs des Dokuments;
Wiedergeben zumindest eines zweiten Teils des Dokuments, um ein Bild des zweiten Teils (8, 9, 10) des Dokuments zu erstellen, wobei der zweite Teil des Dokuments den angescrollten Bereich enthält, Komprimieren des Bildes des zweiten Teils (8, 9, 10) des Dokuments und Senden des komprimierten Bildes des zweiten Teils (8, 9, 10) des Dokuments an die remote tragbare Einrichtung (12); **dadurch gekennzeichnet, dass** das Verfahren ferner Folgendes umfasst:
nach dem Senden des zweiten Teils des Bildes (8, 9, 10), und als Reaktion auf das Senden der Meldung, automatisches Erstellen zusätzlicher komprimierter Teile des Bildes (8, 9, 10), die den zweiten Teil des Bildes (8, 9,10) umgeben, und Senden der zusätzlichen komprimierten Teile des Bildes (8, 9, 10) an den Benutzer (3).

10. Verfahren nach Anspruch 9, worin das Senden der zusätzlichen komprimierten Teile des Bildes (8, 9, 10) einer Änderung einer zuvor bestimmten Reihenfolge des Sendens komprimierter Teile des Bildes (8, 9, 10) an die Remote-Einrichtung (12) entspricht.

## Revendications

1. Procédé mis en oeuvre sur un dispositif portatif (12) pour accéder à des documents distants, le procédé consistant à :
envoyer en provenance du dispositif (12) à un serveur distant (1) une demande de document, le document comprenant des graphiques et du texte ;
recevoir au niveau du dispositif (12) en provenance du serveur distant (1) une première partie (7) d'une image (5) dans un format compressé, la première partie (7) de l'image (5) ayant été rendue au niveau du serveur distant (1) à partir du document comprenant les graphiques et le texte, la zone de l'image (5) étant plus grande qu'une zone affichage (13) du dispositif (12) ;
afficher la première partie (7) de l'image (5) sur le dispositif (12) ;
recevoir une entrée au niveau du dispositif (12) indiquant qu'un utilisateur (3) du dispositif (12) est en train de faire défiler la première partie (7) de l'image (5) ;
envoyer un message au serveur distant (1) indiquant une zone cible de défilement de l'image (5) ; et
recevoir au niveau du dispositif (12) en provenance du serveur distant (1) une seconde partie (8, 9, 10) de l'image (5) dans un format compressé, la seconde partie (8, 9, 10) de l'image (5) ayant été rendue au niveau du serveur distant (1) à partir du document comprenant les graphiques et le texte ; le procédé étant **caractérisé en ce qu'**il consiste en outre à :
après la réception de la seconde partie (8, 9, 10) de l'image (5) et en réponse à l'envoi du message, recevoir au niveau du dispositif (12) des parties supplémentaires (8, 9, 10) de l'image (5) qui entourent la seconde partie (8, 9, 10) de l'image (5).

2. Procédé selon la revendication 1, dans lequel le document est une page Web HTML.

3. Procédé selon la revendication 1, dans lequel le défilement est horizontal.

4. Procédé selon la revendication 1, dans lequel le défilement est vertical.

5. Procédé selon la revendication 1, consistant en outre à répondre à un clic d'utilisateur dans une zone affichage (13) du dispositif (12) pendant que les parties supplémentaires (8, 9, 10) sont en train d'être reçues par le dispositif (12).

6. Support de stockage lisible par ordinateur comprenant un code de programme qui, lorsqu'il est traité par un processeur d'un dispositif portatif (12) provoque l'exécution d'un procédé par le dispositif portable (12) afin d'accéder à un document distant, le procédé consistant à :
envoyer en provenance du dispositif (12) à un serveur distant (1) une demande de document, le document comprenant des graphiques et du texte ;
recevoir au niveau du dispositif (12) en provenance du serveur distant (1) une première partie (7) d'une image (5) du document dans un format compressé, la première partie (7) de l'image (5) ayant été rendue au niveau du serveur distant (1) à partir du document comprenant les graphiques et le texte, la zone de l'image (5) étant plus grande qu'une zone affichage (13) du dispositif (12) ;
afficher la première partie (7) de l'image (5) sur le dispositif (12) ;
recevoir une entrée au niveau du dispositif (12) indiquant qu'un utilisateur (3) du dispositif (12) est en train de faire défiler la première partie (7) de l'image (5) ;
envoyer un message au serveur distant (1) indiquant une zone cible de défilement de l'image (5) ;
recevoir au niveau du dispositif (12) en provenance du serveur distant (1) une seconde partie (8, 9, 10) de l'image (5) dans un format compressé, la seconde partie (8, 9, 10) de l'image (5) ayant été rendue au niveau du serveur distant (1) à partir du document comprenant les graphiques et le texte ; et
après la réception de la seconde partie (8, 9, 10) de l'image (5) et en réponse à l'envoi du message, recevoir au niveau du dispositif (12) des parties supplémentaires (8, 9, 10) de l'image (5) qui entourent la seconde partie (8, 9, 10) de l'image (5).

7. Support de stockage lisible par ordinateur selon la revendication 6, dans lequel le document est une page Web HTML et le défilement est horizontal ou vertical.

8. Support de stockage lisible par ordinateur selon la revendication 6, ledit support de stockage lisible par ordinateur comprenant autre code de programme qui, lorsqu'il est exécuté par le processeur du dispositif portable, provoque l'exécution du procédé par le dispositif portable afin d'accéder à un document distant, le procédé consistant en outre à répondre à un clic d'utilisateur dans une zone affichable (13) du dispositif (12) pendant que les parties supplémentaires (8, 9, 10) sont en train d'être reçues par le dispositif (12).

9. Procédé mis en oeuvre sur un système serveur, consistant à :
recevoir en provenance d'un dispositif portable distant (12) une demande de document ;
recevoir le document, le document comprenant des graphiques et du texte, rendre au moins une partie du document afin de créer une image de la première partie (7) du document, compresser l'image de la première partie (7) du document, et envoyer l'image compressée de la première partie (7) du document au dispositif portable distant (12) ;
recevoir en provenance du dispositif portable distant (12) un message indiquant qu'un utilisateur (3) du dispositif portable distant (12) a fait défiler l'image de la première partie du document, et indiquant la zone cible de défilement du document ;
rendre au moins une seconde partie du document pour créer une image de la seconde partie (8, 9, 10) du document, la seconde partie du document comprenant la zone cible de défilement, compresser l'image de la seconde partie (8, 9, 10) du document, et envoyer l'image compressée de la seconde partie (8, 9, 10) du document au dispositif portable distant (12) ; le procédé étant **caractérisé en ce qu'**il consiste en outre à :
après l'envoi de la seconde partie de l'image (8, 9, 10) et en réponse à l'envoi du message, générer automatiquement des parties compressées supplémentaires de l'image (8, 9, 10) qui entourent la seconde partie de l'image (8, 9,10), et envoyer les parties compressées supplémentaires de l'image (8, 9, 10) à l'utilisateur (3).

10. Procédé selon la revendication 9, dans lequel l'envoi des parties compressées supplémentaires de l'image (8, 9, 10) correspond à un changement d'un ordre d'envoi déterminé antérieurement des parties compressées de l'image (8, 9, 10) au dispositif distant (12).
